# EUROPEAN PATENT SPECIFICATION

(11) **EP 4 286 231 B1**
(45) Date of publication and mention of the grant of the patent: **25.02.2026**
(21) Application number: 22176880.7
(22) Date of filing: 02.06.2022
(51) Int. Cl.: B60T 17/00

(54) **NOISE DAMPER WITH AT LEAST ONE FIBRE MESH ROLL UNIT HAVING AT LEAST TWO MESH DENSITY REGIONS AND METHOD FOR PRODUCING A FIBRE MESH ROLL UNIT**
SCHALLDÄMPFER MIT MINDESTENS EINER FASERGEWEBEROLLENEINHEIT MIT MINDESTENS ZWEI MASCHENDICHTEBEREICHEN UND VERFAHREN ZUR HERSTELLUNG EINER FASERGEWEBEROLLENEINHEIT
AMORTISSEUR DE BRUIT AVEC AU MOINS UNE UNITÉ DE ROULEAU DE MAILLE EN FIBRE AYANT AU MOINS DEUX RÉGIONS DE DENSITÉ DE MAILLE ET PROCÉDÉ DE PRODUCTION D'UNE UNITÉ DE ROULEAU DE MAILLE EN FIBRE

(43) Date of publication of application: 06.12.2023
(73) Proprietor: KNORR-BREMSE Systeme für Nutzfahrzeuge GmbH, 80809 München (DE)
(72) Inventor: SOMODI, Richard, 6034 Helvécia (HU); TANCZOS, Miklos, 6000 Kecskemet (HU); SOVAGO, Szabolcs, 6000 Kecskemet (HU)

(56) References cited:
- WO-A1-2017/009445
- DE-U1- 202004 011 630
- DE-U1- 202007 006 627

## Description

The present invention relates to a noise damper for compressed air systems, in particular for brake systems of utility vehicles, with at least one fibre mesh roll unit having at least two mesh density regions.

Further, the present invention relates to a method for producing a fibre mesh roll unit for a noise damper for compressed air systems, in particular for brake systems of utility vehicles.

In practice, it is known that compressed air systems for brake systems of utility vehicles often release large amounts of compressed air into the environment within a very short time. This expansion process can produce considerable noise. In order to keep the noise emission at an acceptable level, noise dampers or silencers are often necessary for compressed air systems.

Inside a noise damper a fibre mesh can be used to prevent a rapid passage of the air flow through the noise damper. In other words, the flow path for the compressed air inside the noise damper can be prolonged by a fibre mesh, wherein the performance of noise reduction depends inter alia on the density and structure of the fibre mesh.

This is already known from WO 2019/063350 A1 which discloses a noise damper for compressed air systems, in particular for brake systems of utility vehicles, is known. The noise damper comprises a housing with an inlet channel for a compressed air flow and a chamber for receiving sound-damping material. The inlet channel and the chamber are separated perpendicular to the compressed air flow by a separation plate, which in an outer peripheral region of the compressed air flow has a plurality of openings in order to introduce compressed air into the chamber. Inside the chamber of the noise damper a noise damping fibre material having knitted, braided or woven structure or pattern, or, alternatively, a granulate material can be used.

Thus, prior art noise dampers use fibre meshes inside their housings which in principle have a uniform structure or density, i.e. the spacing between the woven or knitted fibres is constant.

From WO 2017/009445 A1, however, a sound attenuator for discharging compressed air from a valve of a compressed air treatment system of a motor vehicle and for attenuating the outflow noises is known. The sound attenuator comprises a housing with at least one inlet opening and at least one outlet opening, as well as a noise-reduction material arranged in said housing between the at least one inlet opening and the at least one outlet opening, for the purpose of reducing flow noises of compressed air that expands in the housing and flows through the noise-reduction material. In order to reduce noise emissions, the noise-reduction material has, in a central region adjoining the at least one inlet opening, a higher packing density than it has in an outer region adjoining the at least one outlet opening. However, the production of such a noise-reduction material having a gradual density is complex and expensive.

It is therefore an object of the present invention to improve a noise damper as mentioned above, in particular in that the noise damping performance is increased, while its production is facilitated.

This object is solved according to the present invention with a noise damper according to the features of claim 1. Correspondingly, a noise damper for compressed air systems, in particular for brake systems of utility vehicles, comprising at least one fibre mesh roll unit having at least two mesh density regions, at least one inlet, at least one outlet, and a housing is provided. The at least one fibre mesh roll unit is accommodated within the housing of the noise damper to dampen noise emissions of air flowing through from the at least one inlet to the at least one outlet.

The invention is based on the basic idea that density of the fibre mesh accommodated inside a housing of a noise damper is partially increased in direction of the air flowing through which leads to an increased noise damping performance without, however, impairing the functionality of the noise damper due to impounded air, i.e. accumulating air to such an extent that the flow resistance becomes too great. In other words, by using regions of different fibre mesh density the flow resistance can be properly levelled, while the fibre mesh maintains the increased performance in noise damping due to regions of higher density.

It may be further provided that the at least one fibre mesh roll unit is made from thermoplastic fibres. The flexibility or pliability of the thermoplastic fibres allows them to be knitted or woven.

Furthermore, it is possible that the at least one the fibre mesh roll unit is knitted and/or woven.

Knitting allows to create a mesh structure or pattern by connecting or interlocking fibre loops, wherein the loop size can be used to adjust the mesh density and thus also the flow resistance of the knitted fibre mesh. Knitting creates loops of fibre in a row, which has the advantage that either flat or tubular meshes can be realized. The fibre in a row in knitted meshes follows a meandering path, forming symmetric loops symmetrically above and below the mean path of the yarn. These meandering loops can be easily stretched in different directions giving knitted meshes a high elasticity.

The commonly known industrially used knitting machines or automates generate tubular or tube shape fibre meshes due to their circular manufacturing process or direction. The tubular shape is the starting point for the further preparation of the knitted fibre mesh, in which the tubular shape is flattened in a controlled manner and rolled up to be inserted or accommodated into a noise damper, silencer or muffler.

On the other hand, in case of weaving, two distinct sets of fibres are interlaced at right angles to form a mesh, resulting in a rigid and substantially shape-maintaining mesh which is easy to process and in particular can be processed, depending on the fibre strength, at higher machine speeds compared to other manufacturing techniques.

Both knitting and weaving, preferably results in an approximately uniform fibre pattern of each mesh density region.

It is further possible that the at least one fibre mesh roll comprises at least one first mesh density region and at least one second mesh density region, wherein the density of the at least one first mesh density region is lower than the density of the at least one second mesh density region. The different densities ensure that the noise is efficiently damped on the one hand and that the compressed air can still flow through on the other.

It is further conceivable that the at least one first mesh density region and the at least one second mesh density region are arranged alternately in the direction of the circumference of the tubular shape of the fibre mesh. As a result, the air flowing through is obstructed more strongly at defined, essentially equidistant distances than in the regions in between, and consequently the impediment of the air flow is distributed over the entire height of the chamber of a noise damper.

It is also possible that the least one first mesh density region is arranged adjacent to the at least one inlet and the least one second mesh density region is arranged adjacent to the at least one outlet, so that air flowing through the noise damper first passes the at least one first mesh density region and then the at least one second mesh density region of the at least one fibre mesh roll unit. Arranging the mesh region with the higher density adjacent to or in the vicinity of the at least one outlet improves the noise damping performance.

The extension of the first and the second mesh density region, referred to the air flow direction, can be equal or different.

It is further conceivable that a plurality of the at least one first mesh density region and a plurality of the at least one second mesh density region are arranged alternately in the direction from the at least one inlet to the at least one outlet of the noise damper. In this way, the mesh regions having a higher density are distributed along the entire length of the housing in the air flow direction, which reduces the noise sound gradually or stepwise.

In the case of an alternating arrangement, it is also conceivable that, referring to the air flow direction, the extension of the mesh regions with lower density successively decreases, while conversely the extension of the mesh regions with higher density increases.

It is also possible that the fibre mesh roll unit further comprises at least one third mesh density region having a density higher than the second mesh density region, wherein the at least one first, second, and third mesh density regions are arranged by increasing density in the direction from the at least one inlet to the at least one outlet. This causes the air flowing through a noise damper to be hindered increasingly in the direction of the outlets. With a stepwise increase of the density of consecutive regions, referring to the air flow direction, a (too) strong deceleration at the transition between to neighbouring regions can be avoided.

Furthermore, it is possible that the at least one fibre mesh roll unit comprises one rolled-up fibre mesh with at least two mesh density regions or a plurality of stacked rolled-up fibre meshes each having one mesh density. Depending on the production setup, one fibre mesh roll unit having different mesh density regions can be produced e.g. by knitting, wherein the different mesh density regions are obtained by the setup of the needles along the circumference of the circular knitting machine. On the other hand, the fibre mesh roll unit can be generated by stacking fibre mesh rolls on top of each other, wherein each fibre mesh roll has its own mesh density.

Since commonly noise dampers have a circularly shaped inner diameter, it is obvious that the fibre mesh roll unit is accommodated or placed inside the housing of the noise damper in that the roll-up direction is perpendicular to the air flow direction.

It is further conceivable that the stacked rolled-up fibre meshes are connected to each other. This can be achieved by various known connecting techniques applicable to thermoplastic fibres such as gluing, hot melting, stitching together or the like.

The object of the present invention can further be solved by a method for producing a fibre mesh roll unit for a noise damper for compressed air systems, in particular for brake systems of utility vehicles, wherein the noise damper comprises at least one inlet, at least one outlet, and a housing, and wherein the method comprises the steps of:
- knitting a tubular fibre mesh from thermoplastic fibres such that at least two regions of different mesh densities are formed;
- controlled flattening the tubular fibre mesh; and
- rolling the flattened tubular fibre;
wherein the at least two mesh density regions are arranged by increasing density or alternately referred to a flow direction of air flowing through the noise damper.

To obtain a tubular shape, the fibre mesh is circularly knitted by a corresponding knitting device, tool, machine, or automat. Such a device comprises circularly arranged knitting needles, wherein the mesh density of the fibre mesh can be adjusted by the distribution of the device's needles. Accordingly, needles arranged closer together along the needle circle of the knitting device create a corresponding mesh region with a higher density. The knitted fibre mesh is then flattened, e.g. between two rolling cylinders, wherein the feeding of the flattening device is controlled to adjust the circumferential orientation of the fibre mesh tube. This controlling ensures that the arrangement of the different mesh density regions of the flattened and rolled-up fibre mesh corresponds to the predetermined arrangement of the fibre mesh roll unit as to be accommodated inside a noise damper's housing.

The advantage of this method is that a cohesive fibre mesh tube is created, which already has the desired sequence of mesh density regions arranged around the circumference.

The present invention further relates to a method for producing a fibre mesh roll unit for a noise damper for compressed air systems, in particular for brake systems of utility vehicles, wherein the method comprises the steps of:
- knitting and/or weaving a plurality of fibre meshes from thermoplastic fibres each having at least one mesh density;
- rolling the fibre meshes to form fibre mesh rolls; and
- stacking the rolled-up fibre meshes to form a fibre mesh roll unit having at least two mesh density regions;
wherein the at least two mesh density regions are arranged by increasing density or alternately referred to a flow direction of air flowing through the noise damper.

The fibre mesh can either be knitted or woven from thermoplastic fibres, wherein the respective fibre mesh has an individual and preferably uniform mesh density. A roll is then formed from each fibre mesh by rolling it up, wherein knitted fibre meshes usually still have to be flattened first. Thereafter, the various roll-up fibre meshes are stacked upon each other, wherein the order corresponds to the predetermined sequence of mesh densities.

The advantage of this method is that fibre mesh rolls of different densities can be produced in parallel in several machines and then stacked to form a fibre mesh roll unit.

It is also possible that the method further comprises a step of connecting the rolled-up fibre meshes to each other, wherein typical connecting techniques for thermoplastic fibres can be applied like gluing, hot melting, stitching etc.

All the structural and functional features associated with the above-described fibre mesh according to the present invention and its possible embodiments can also be provided, alone or in combination, by one of the methods for producing a fibre mesh roll unit according to the present invention and the advantages associated therewith can be achieved as well.

Further details and advantages of the present invention shall now be disclosed in an embodiment according to the invention in connection with the drawing.

It is shown in:
- Fig. 1: a sectional view of an embodiment of a noise damper of the prior art;
- Fig. 2: a sectional view of the lower housing of the embodiment of Fig. 1;
- Fig. 3: a sectional view of the lower housing of a noise damper according to the present invention comprising a first embodiment of a fibre mesh roll unit;
- Fig. 4: a schematic view of the first embodiment of a knitted fibre mesh roll unit of Fig. 3;
- Fig. 5: a schematic view of a second embodiment of a woven fibre mesh roll unit;
- Fig. 6: a schematic view of a third embodiment of a knitted fibre mesh roll unit;
- Fig. 7: a schematic view of a fourth embodiment of a woven fibre mesh roll unit;
- Fig. 8: a schematic view of a fifth embodiment of a knitted fibre mesh roll unit;
- Fig. 9: a schematic view of a sixth embodiment of a woven fibre mesh roll unit;
- Fig. 10: an embodiment of a method for producing a fibre mesh roll unit according to the present invention;
- Fig. 11: a schematic view of the steps of the method of Fig. 10; and
- Fig. 12: an embodiment of another method for producing a fibre mesh roll unit according to the present invention.

In order to better distinguish between the different embodiments as well as the prior art, same or corresponding elements have each been amended by 100 in the corresponding reference signs of the figures.

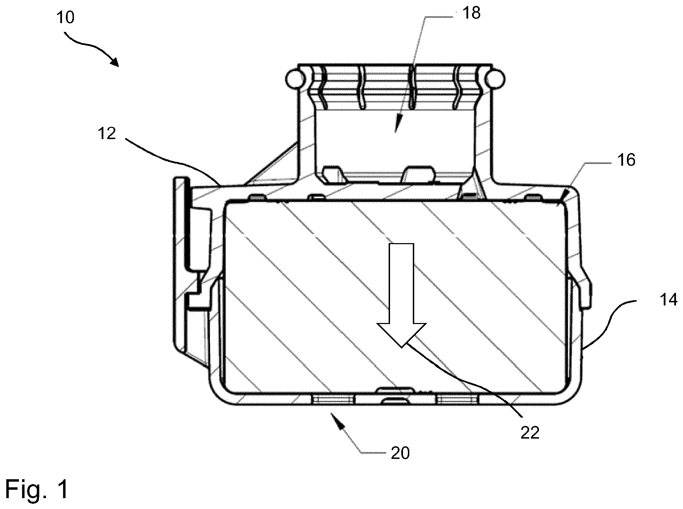

Fig. 1 shows sectional view of an embodiment of a noise damper 10 of the prior art.

The noise damper 10 comprises an upper housing 12 and a lower housing 14 which both enclose a chamber 16. The noise damper 10 further comprises an air inlet 18 and an air outlet 20, wherein compressed air 22 flows from the air inlet 18 to the air outlets 20.

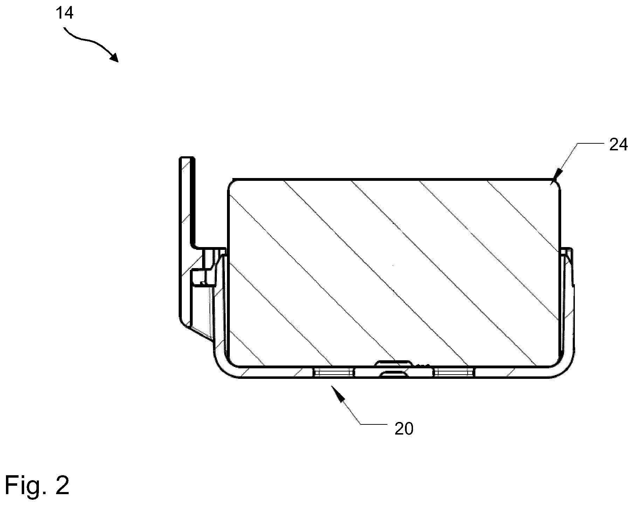

In Fig. 2, just the lower housing 14 is shown, accommodating a noise damping material in form or fibre mesh 24 having a uniform structure. This means that the air flow is generally obstructed, but the propagation of the noise is not efficiently reduced.

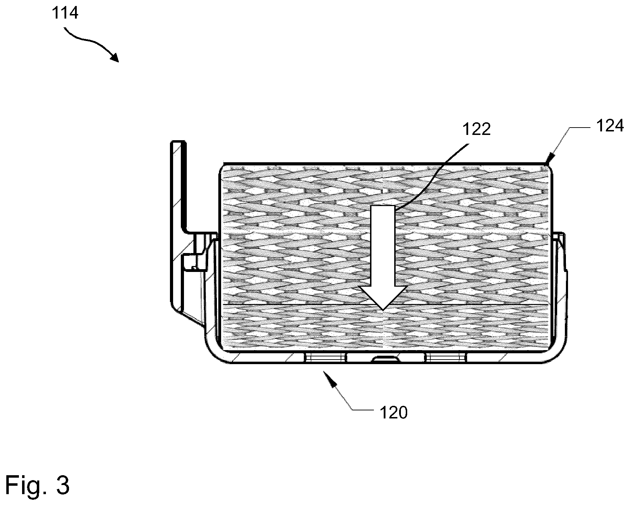

In contrast, Fig. 3 shows a lower housing 114 of a noise damper 100 according to the present invention accommodating a first embodiment of a fibre mesh roll unit 124, which is flowed through from top to bottom by compressed air 122.

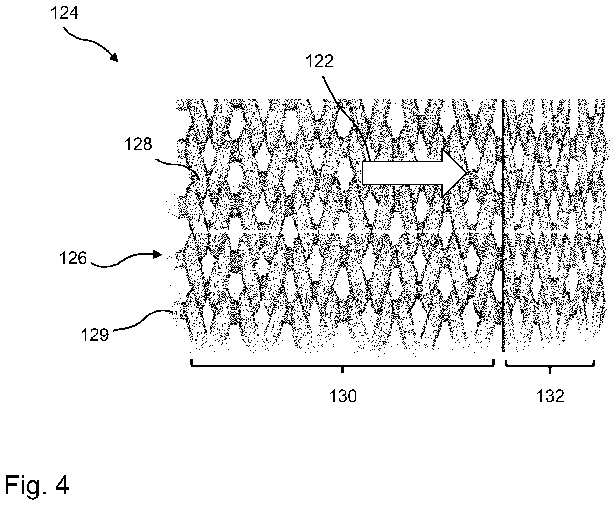

The fibre mesh roll unit 124 of Fig. 3 is further presented in Fig. 4 in greater detail, wherein the flow of the compressed air 122 is from left to right.

The fibre mesh of the fibre mesh roll unit 124 of Fig. 4 is knitted, i.e. a plurality of rows 126, each of which comprising a plurality of loops 128, have been connected or interlocked in that each loop 128 is connected to a neighbouring loop 128 of the preceding and the following row 126.

The loop rows 126 are made of a thermoplastic fibre 129.

Advantageously about the knitted fibre mesh 124 of Fig. 4 is that it is stretchable due to its loops 128.

Furthermore, the fibre mesh of Fig. 4 has a first mesh density region 130 and a second mesh density region 132, wherein the mesh density is adjustable by the size of the loops 128.

The mesh density of the first mesh density region 130 is lower than that of the second mesh density region 132.

Thus, the passing air 122 is increasingly obstructed when flowing from left to right, i.e. when moving from the first mesh density region 130 to the second mesh density region 132.

The fibre mesh roll unit 124 can either be formed of a single knitted fibre mesh tube with a first mesh density region 130 and a second mesh density region132 or of two stacked fibre mesh rolls, wherein the upper one forms the first mesh density region 130 and the lower one forms the second mesh density regions 132 of the fibre mesh roll unit 124. The same applies for the following embodiments

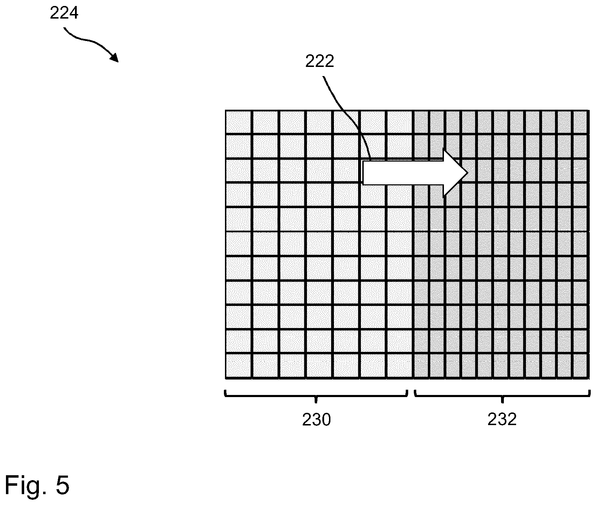

In Fig. 5, a second embodiment of a fibre mesh roll unit 224 according to the present invention is shown. The fibre mesh 224 is woven, i.e. the thermoplastic fibres have been interlaced perpendicular to each other what provides more rigidity to the fibre mesh 224 compared to that of Fig. 4.

The fibre mesh roll unit 224 also comprises a first mesh density region 230, being arranged firstly in the direction of the air flow 222, and a second mesh density region 232. Thus, again, the flowing air 222 is increasingly obstructed which results in a higher noise damping performance.

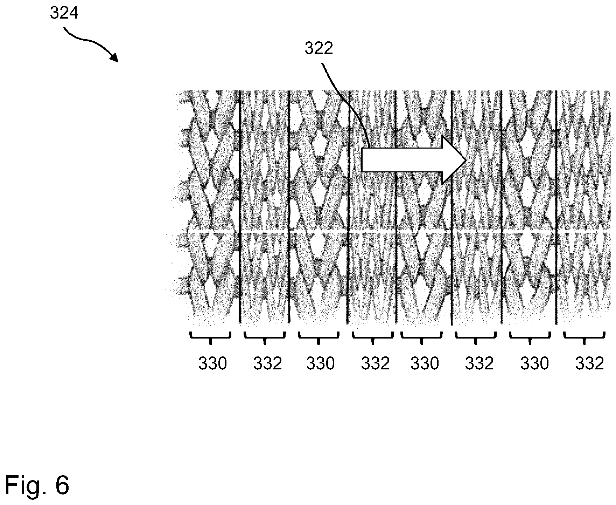

In Fig. 6, a third embodiment of a fibre mesh roll unit 324 according to the present invention is presented. The fibre mesh 324 is knitted and comprises a plurality of first mesh density regions 330 and a plurality of second mesh density regions 332, wherein the first mesh density regions 330 and the second mesh density regions 332 are arranged alternately in direction of the air flow 322.

Referring to the air flow 322, the extension of the mesh density regions 330, 332 is smaller than that of the comparable regions of Fig. 4. Hence, the air flow 322 is slowed down in an alternating manner, i.e. after defined, substantially equidistant distances, the air flow is more strongly impeded than in the regions in between.

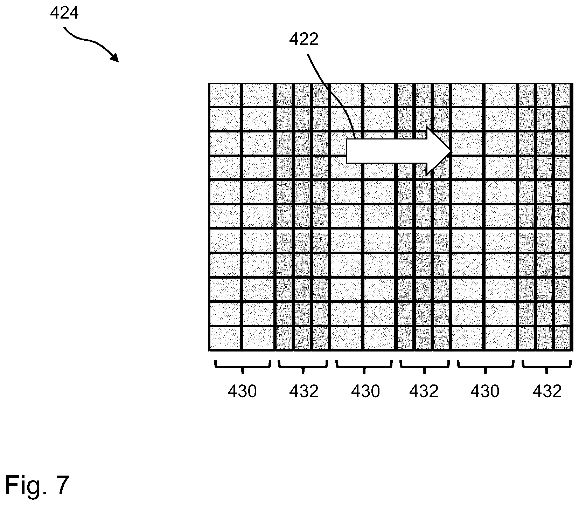

Same is true for a fourth embodiment of a fibre mesh 424 according to the present invention as shown in Fig. 7. The fibre mesh roll unit 424 is woven as the fibre mesh roll unit 224 of Fig. 5.

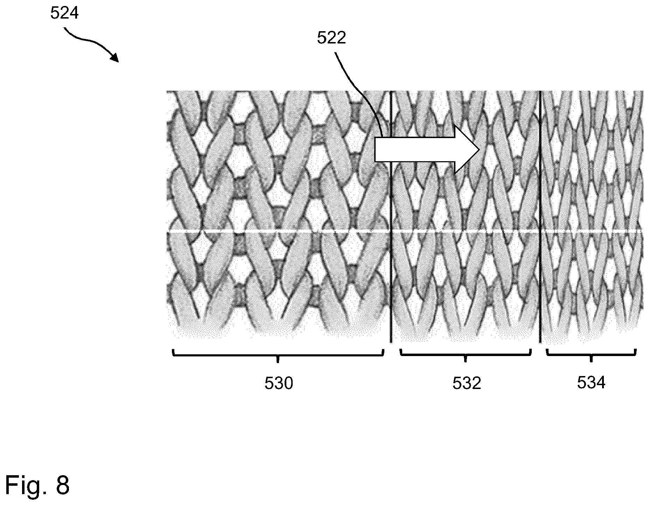

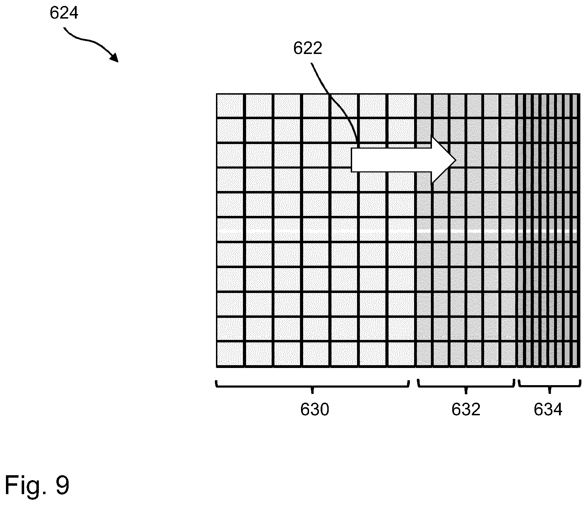

In Figs. 8 and 9, another sequence of mesh density regions is presented, whereby the sequence shown can be understood as a continuation or extension of the sequence according to Fig. 4 and 5, respectively.

In Fig. 8, a fifth embodiment of a fibre mesh roll unit 524 according to the present invention is shown, while in Fig. 9, a sixth embodiment of a fibre mesh roll unit 624 according to the present invention is shown.

Again, the two fibre meshes 524, 624 differ in the manufacturing technique, as the fibre mesh roll unit 524 is knitted and the fibre mesh roll unit 624 is woven.

Both fibre meshes roll units 524, 624 comprise a first mesh density region 530, 630, a second mesh density region 532, 632, and a third mesh density region 534, 634, wherein the three regions are arranged, referring to the air flow 522, 622, by increasing mesh density. Thus, the air flow 522, 622 is increasingly obstructed, wherein the difference in density from one mesh density region to the following is smaller compared to the embodiments of Fig. 4 and 5.

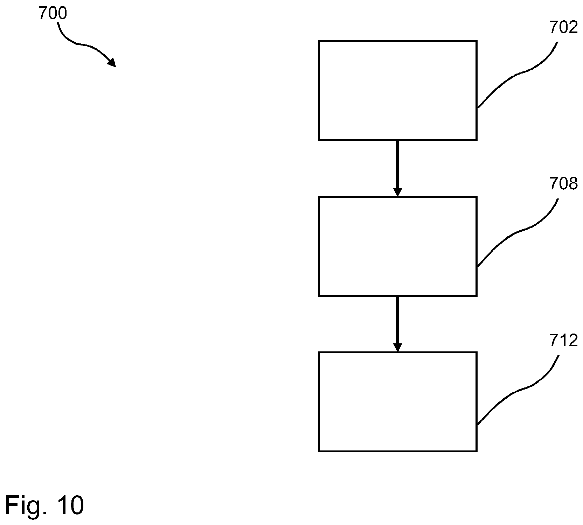

In Fig. 10, an embodiment of a method 700 according to the present invention for producing a fibre mesh roll unit for a noise damper for compressed air systems is shown.

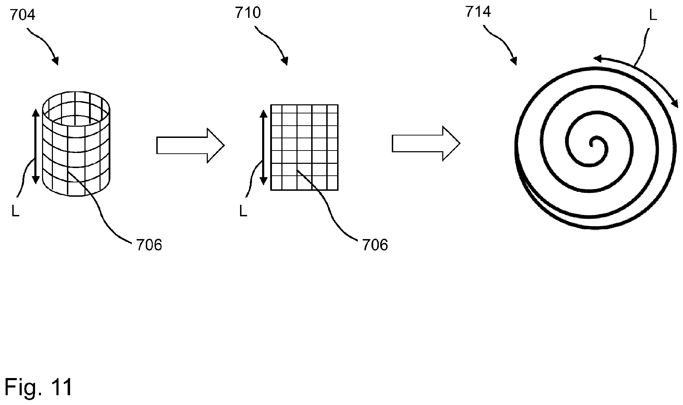

In addition, parts of the steps from Fig. 10 are illustrated in Fig. 11.

In a first method step 702, a tubular fibre mesh 704 is knitted from thermoplastic fibres 706.

To obtain a tubular shape, the fibre mesh 704 is circularly knitted by a corresponding knitting device. Such a device comprises circularly arranged knitting needles, wherein the mesh density of the fibre mesh 704 can be adjusted by the distribution of the device's needles. Accordingly, needles arranged closer together along the needle circle of the knitting device create a corresponding mesh region with a higher density.

In the knitting device, the fibre mesh 704 is produced in a direction L.

The tubular mesh 704 obtained has the same advantages and structural and functional features as the embodiments of the fibre mesh described in context of Figs. 3 to 8, in particular at least two different mesh density regions.

In a second method step 708, the knitted tubular fibre mesh 704 is flattened. This can inter alia be achieved in that the tubular mesh 704 is passed between two rollers or cylinders in the direction L. The flattening is controlled in that the orientation is adjusted before passing the rollers such that the arrangement of the mesh density regions after flattening corresponds to a predetermined arrangement of the mesh density regions. A two-layer mesh band 710 is thus obtained.

In a third method step 712, the flattened tubular mesh or two-layer mesh band 710 is rolled around an axis perpendicular to the production direction L, whereby a role 714 of the knitted and flattened fibre mesh is obtained.

The role 714 of the flattened tubular fibre mesh 704 is accommodated within a noise damper such that the different mesh density regions are aligned in that the density either increases or alternates in flow direction of the passing compressed air.

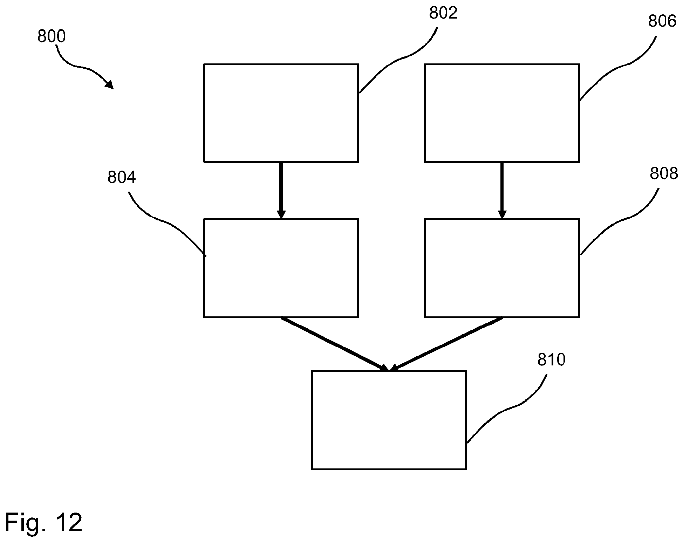

In Fig. 12, another method 800 for producing a fibre mesh roll unit is presented.

In a first method step 802, a first fibre mesh of a first mesh density is woven and/or knitted from thermoplastic fibres. Afterwards, the first fibre mesh is roll-up in a second method step 804.

Separately and possibly in parallel, in a third method step 806, a second fibre mesh of a second mesh density is woven and/or knitted also from thermoplastic fibres. Again, in a fourth method step 808, the second fibre mesh is roll-up.

Finally, in a fifth method step 810, the first and the second fibre mesh rolls are stacked and placed inside a housing of a noise damper.

### REFERENCE SIGNS

- 10: noise damper
- 12: upper housing
- 14, 114: lower housing
- 16: chamber
- 18: air inlet
- 20, 120: air outlet
- 22, 122, 222, 322, 422, 522, 622: air flow
- 24: fibre mesh
- 100: noise damper
- 124, 324, 524, 704: knitted fibre mesh roll unit
- 224, 424, 624: woven fibre mesh roll unit
- 126: loop row
- 128: row
- 129, 706: thermoplastic fibre
- 130, 230, 330, 430, 530, 630: first mesh density region
- 132, 232, 332, 432, 532, 632: second mesh density region
- 534, 634: third mesh density region
- 700: first method for producing a fibre mesh
- 702: first method step
- 704: tubular mesh
- 708: second method step
- 710: two-layer mesh band
- 712: third method step
- 714: fibre mesh role
- 800: second method for producing a fibre mesh
- 802: first method step
- 804: second method step
- 806: third method step
- 808: fourth method step
- 810: fifth method step
- L: production direction

## Claims

1. A noise damper (100) for compressed air systems, in particular for brake systems of utility vehicles, comprising
at least one fibre mesh roll unit (124, 224, 324, 424, 524, 624),
at least one inlet, at least one outlet (120), and a housing,
wherein the at least one fibre mesh roll unit (124, 224, 324, 424, 524, 624) is accommodated within the housing of the noise damper (100) to dampen noise emissions of air flowing through from the at least one inlet to the at least one outlet (120),
**characterized in that**
the at least one fibre mesh roll unit (124, 224, 324, 424, 524, 624) has at least two mesh density regions (130, 132, 230, 232, 330, 332, 430, 432, 530, 532, 534, 630, 632, 634), and
the at least two mesh density regions are arranged by increasing density or alternately referred to a flow direction of air flowing through the noise damper (100).

2. The noise damper (100) according to claim 1,
**characterized in that**
the at least one fibre mesh roll unit (124, 224, 324, 424, 524, 624) is made from thermoplastic fibres.

3. The noise damper (100) according to claim 1 or claim 2,
**characterized in that**
the at least one the fibre mesh roll unit (124, 224, 324, 424, 524, 624) is knitted and/or woven.

4. The noise damper (100) according to one of the preceding claims,
**characterized in that**
the at least one fibre mesh roll unit (124, 224, 324, 424) comprises at least one first mesh density region (130, 230, 330, 430) and at least one second mesh density region (132, 232, 332, 432), wherein the density of the at least one first mesh density region (130, 230, 330, 430) is lower than the density of the at least one second mesh density region (132, 232, 332, 432).

5. The noise damper (100) according to claim 4,
**characterized in that**
the at least one first mesh density region (130, 230, 330, 430) is arranged adjacent to the at least one inlet and the least one second mesh density region (132, 232, 332, 432) is arranged adjacent to the at least one outlet (120), so that air flowing through the noise damper (100) first passes the at least one first mesh density region (130, 230, 330, 430) and then the at least one second mesh density region (132, 232, 332, 432) of the at least one fibre mesh roll unit (124, 224, 324, 424).

6. The noise damper (100) according to claim 4,
**characterized in that**
a plurality of the at least one first mesh density region (130, 230, 330, 430) and a plurality of the at least one second mesh density region (132, 232, 332, 432) are arranged alternately in the direction from the at least one inlet to the at least one outlet (120) of the noise damper (100).

7. The noise damper (100) according to claim 4,
**characterized in that**
the fibre mesh roll unit (524, 624) further comprises at least one third mesh density region (534, 634) having a density higher than the second mesh density region (532, 632), wherein the at least one first, second, and third mesh density (530, 532, 534, 630, 632, 634) regions are arranged by increasing density in the direction from the at least one inlet to the at least one outlet (120).

8. The noise damper (100) according to one of the preceding claims,
**characterized in that**
the at least one fibre mesh roll unit (124, 224, 324, 424, 524, 624) comprises one rolled-up fibre mesh with at least two mesh density regions (130, 132, 230, 232, 330, 332, 430, 432, 530, 532, 534, 630, 632, 634) or a plurality of stacked rolled-up fibre meshes each having one mesh density (130, 132, 230, 232, 330, 332, 430, 432, 530, 532, 534, 630, 632, 634).

9. The noise damper (100) according to claim 8,
**characterized in that**
the roll-up direction is perpendicular to a direction of air flowing through the noise damper (100).

10. The noise damper (100) according to claim 8 or claim 9,
**characterized in that**
the stacked rolled-up fibre meshes are connected to each other.

11. A method (700) for producing a fibre mesh roll unit (124, 224, 324, 424, 524, 624) for a noise damper (100) for compressed air systems, in particular for brake systems of utility vehicles, wherein the noise damper (100) comprises at least one inlet, at least one outlet (120), and a housing,
**characterized in that**
the method (700) comprises the steps of:
- knitting (702) a tubular fibre mesh (704) from thermoplastic fibres (706) such that at least two regions of different mesh densities are formed;
- controlled flattening (708) the tubular fibre mesh (704); and
- rolling (712) the flattened tubular fibre mesh (704);
wherein the at least two mesh density regions are arranged by increasing density or alternately referred to a flow direction of air flowing through the noise damper (100).

12. A method (800) for producing a fibre mesh roll unit (124, 224, 324, 424, 524, 624) for a noise damper (100) for compressed air systems, in particular for brake systems of utility vehicles,
**characterized in that**
the method comprises the steps of:
- knitting and/or weaving a plurality of fibre meshes from thermoplastic fibres each having at least one mesh density;
- rolling (804, 808) the fibre meshes to form fibre mesh rolls; and
- stacking (810) the rolled-up fibre meshes to form a fibre mesh roll unit having at least two mesh density regions;
wherein the at least two mesh density regions are arranged by increasing density or alternately referred to a flow direction of air flowing through the noise damper.

13. The method (800) according to claim 12, further comprising a step of connecting the rolled-up fibre meshes to each other.

## Patentansprüche

1. Schalldämpfer (100) für Druckluftsysteme, insbesondere für Bremssysteme von Nutzfahrzeugen, umfassend
mindestens eine Fasergeweberolleneinheit (124, 224, 324, 424, 524, 624), mindestens einen Einlass, mindestens einen Auslass (120) und ein Gehäuse,
wobei die mindestens eine Fasergeweberolleneinheit (124, 224, 324, 424, 524, 624) innerhalb des Gehäuses des Schalldämpfers (100) untergebracht ist, um die Schallemissionen der vom mindestens einen Einlass zum mindestens einen Auslass (120) strömenden Luft zu dämpfen,
**dadurch gekennzeichnet, dass**
die mindestens eine Fasergeweberolleneinheit (124, 224, 324, 424, 524, 624) mindestens zwei Gewebedichtbereiche (130, 132, 230, 232, 330, 332, 430, 432, 530, 532, 534, 630, 632, 634) aufweist, und
die mindestens zwei Gewebedichtbereiche nach zunehmender Dichte oder abwechselnd in Bezug auf eine Strömungsrichtung der durch den Schalldämpfer (100) strömenden Luft angeordnet sind.

2. Schalldämpfer (100) nach Anspruch 1,
**dadurch gekennzeichnet, dass**
die mindestens eine Fasergeweberolleneinheit (124, 224, 324, 424, 524, 624) aus thermoplastischen Fasern gefertigt ist.

3. Schalldämpfer (100) nach Anspruch 1 oder Anspruch 2,
**dadurch gekennzeichnet, dass**
die mindestens eine der Fasergeweberolleneinheiten (124, 224, 324, 424, 524, 624) gestrickt und/oder gewebt ist.

4. Schalldämpfer (100) nach einem der vorstehenden Ansprüche,
**dadurch gekennzeichnet, dass**
die mindestens eine Fasergeweberolleneinheit (124, 224, 324, 424) mindestens einen ersten Gewebedichtbereich (130, 230, 330, 430) und mindestens einen zweiten Gewebedichtbereich (132, 232, 332, 432) umfasst, wobei die Dichte des mindestens einen ersten Gewebedichtbereichs (130, 230, 330, 430) geringer ist als die Dichte des mindestens einen zweiten Gewebedichtbereichs (132, 232, 332, 432).

5. Schalldämpfer (100) nach Anspruch 4,
**dadurch gekennzeichnet, dass**
der mindestens eine erste Gewebedichtbereiche (130, 230, 330, 430) neben dem mindestens einen Einlass angeordnet ist, und der mindestens eine zweite Gewebedichtbereiche (132, 232, 332, 432) neben dem mindestens einen Auslass (120) angeordnet ist, sodass durch den Schalldämpfer (100) strömende Luft zuerst den mindestens einen ersten Gewebedichtbereich (130, 230, 330, 430) und danach den mindestens einen zweiten Gewebedichtbereich (132, 232, 332, 432) der mindestens einen Fasergeweberolleneinheit (124, 224, 324, 424) durchläuft.

6. Schalldämpfer (100) nach Anspruch 4,
**dadurch gekennzeichnet, dass**
eine Vielzahl von mindestens einem ersten Gewebedichtbereich (130, 230, 330, 430) und eine Vielzahl von mindestens einem zweiten Gewebedichtbereich (132, 232, 332, 432) abwechselnd in der Richtung von dem mindestens einen Einlass zum mindestens einen Auslass (120) des Schalldämpfers (100) angeordnet sind.

7. Schalldämpfer (100) nach Anspruch 4,
**dadurch gekennzeichnet, dass**
die Fasergeweberolleneinheit (524, 624) weiter mindestens einen dritten Gewebedichtbereich (534, 634), der eine höhere Dichte als der zweite Gewebedichtbereich (532, 632) aufweist, umfasst, wobei der mindestens eine erste, zweite und dritte Gewebedichtbereich (530, 532, 534, 630, 632, 634) in der Richtung von dem mindestens einen Einlass zum mindestens einen Auslass (120) nach zunehmender Dichte angeordnet sind.

8. Schalldämpfer (100) nach einem der vorstehenden Ansprüche,
**dadurch gekennzeichnet, dass**
die mindestens eine Fasergeweberolleneinheit (124, 224, 324, 424, 524, 624) ein aufgerolltes Fasergewebe mit mindestens zwei Gewebedichtbereichen (130, 132, 230, 232, 330, 332, 430, 432, 530, 532, 534, 630, 632, 634) oder eine Vielzahl von gestapelten aufgerollten Fasergeweben, die jeweils eine Gewebedichte (130, 132, 230, 232, 330, 332, 430, 432, 530, 532, 534, 630, 632, 634) aufweisen, umfasst.

9. Schalldämpfer (100) nach Anspruch 8,
**dadurch gekennzeichnet, dass**
die Aufrollrichtung senkrecht zu einer Richtung der durch den Schalldämpfer strömenden Luft (100) steht.

10. Schalldämpfer (100) nach Anspruch 8 oder Anspruch 9,
**dadurch gekennzeichnet, dass**
die gestapelten, aufgerollten Fasergewebe miteinander verbunden sind.

11. Verfahren (700) zur Herstellung einer Fasergeweberolleneinheit (124, 224, 324, 424, 524, 624) für einen Schalldämpfer (100) für Druckluftsysteme, insbesondere für Bremssysteme von Nutzfahrzeugen, wobei der Schalldämpfer (100) mindestens einen Einlass, mindestens einen Auslass (120) und ein Gehäuse umfasst,
**dadurch gekennzeichnet, dass**
das Verfahren (700) die folgenden Schritte umfasst:
- Stricken (702) eines röhrenförmigen Fasergewebes (704) aus thermoplastischen Fasern (706), sodass mindestens zwei Bereiche mit unterschiedlicher Gewebedichte gebildet werden;
- kontrolliertes Abflachen (708) des röhrenförmigen Fasergewebes (704); und
- Rollen (712) des abgeflachten röhrenförmigen Fasergewebes (704);
wobei die mindestens zwei Gewebedichtbereiche nach zunehmender Dichte oder abwechselnd in Bezug auf eine Strömungsrichtung der durch den Schalldämpfer (100) strömenden Luft angeordnet sind.

12. Verfahren (800) zur Herstellung einer Fasergeweberolleneinheit (124, 224, 324, 424, 524, 624) für einen Schalldämpfer (100) für Druckluftsysteme, insbesondere für Bremssysteme von Nutzfahrzeugen,
**dadurch gekennzeichnet, dass**
das Verfahren die folgenden Schritte umfasst:
- Stricken und/oder Weben einer Vielzahl von Fasergeweben aus thermoplastischen Fasern, die jeweils mindestens eine Gewebedichte aufweisen;
- Rollen (804, 808) der Fasergewebe, um Fasergeweberollen zu bilden; und
- Stapeln (810) der aufgerollten Fasergewebe, um eine Fasergeweberolleneinheit zu bilden, die mindestens zwei Gewebedichtbereiche aufweist;
wobei die mindestens zwei Gewebedichtbereiche nach zunehmender Dichte oder abwechselnd in Bezug auf eine Strömungsrichtung der durch den Schalldämpfer strömenden Luft angeordnet sind.

13. Verfahren (800) nach Anspruch 12, das weiter einen Schritt zum Verbinden der aufgerollten Fasergewebe miteinander umfasst.

## Revendications

1. Amortisseur de bruit (100) pour systèmes d'air comprimé, en particulier pour systèmes de freinage de véhicules utilitaires, comprenant
au moins une unité de rouleau de mailles de fibres (124, 224, 324, 424, 524, 624), au moins une entrée, au moins une sortie (120) et un boîtier,
dans lequel l'au moins une unité de rouleau de mailles de fibres (124, 224, 324, 424, 524, 624) est logée dans le boîtier de l'amortisseur de bruit (100) pour atténuer des émissions sonores de l'air circulant de l'au moins une entrée à l'au moins une sortie (120),
**caractérisé en ce que**
l'au moins une unité de rouleau de mailles de fibres (124, 224, 324, 424, 524, 624) comporte au moins deux régions de densité de maillage (130, 132, 230, 232, 330, 332, 430, 432, 530, 532, 534, 630, 632, 634), et
les au moins deux régions de densité de maillage sont disposées par densité croissante ou alternativement par rapport à une direction d'écoulement de l'air traversant l'amortisseur de bruit (100).

2. Amortisseur de bruit (100) selon la revendication 1,
**caractérisé en ce que**
l'au moins une unité de rouleau de mailles de fibres (124, 224, 324, 424, 524, 624) est fabriquée à partir de fibres thermoplastiques.

3. Amortisseur de bruit (100) selon la revendication 1 ou la revendication 2,
**caractérisé en ce que**
l'au moins une unité de rouleau de maille de fibre (124, 224, 324, 424, 524, 624) est tricotée et/ou tissé.

4. Amortisseur de bruit (100) selon l'une des revendications précédentes,
**caractérisé en ce que**
l'au moins une unité de rouleau de mailles de fibres (124, 224, 324, 424) comprend au moins une première région de densité de maillage (130, 230, 330, 430) et au moins une deuxième région de densité de maillage (132, 232, 332, 432), dans lequel la densité de l'au moins une première région de densité de maillage (130, 230, 330, 430) est inférieure à la densité de l'au moins une deuxième région de densité de maillage (132, 232, 332, 432).

5. Amortisseur de bruit (100) selon la revendication 4,
**caractérisé en ce que**
l'au moins une première région de densité de maillage (130, 230, 330, 430) est disposée adjacente à l'au moins une entrée et l'au moins une deuxième région de densité de maillage (132, 232, 332, 432) est disposée adjacente à l'au moins une sortie (120), de sorte que l'air circulant à travers l'amortisseur de bruit (100) passe d'abord par l'au moins une première région de densité de maillage (130, 230, 330, 430) puis par l'au moins une deuxième région de densité de maillage (132, 232, 332, 432) de l'au moins une unité de rouleau de mailles de fibres (124, 224, 324, 424).

6. Amortisseur de bruit (100) selon la revendication 4,
**caractérisé en ce que**
une pluralité de l'au moins une première région de densité de maillage (130, 230, 330, 430) et une pluralité de l'au moins une deuxième région de densité de maillage (132, 232, 332, 432) sont disposées alternativement dans la direction de l'au moins une entrée à l'au moins une sortie (120) de l'amortisseur de bruit (100).

7. Amortisseur de bruit (100) selon la revendication 4,
**caractérisé en ce que**
l'unité de rouleau de mailles de fibres (524, 624) comprend en outre au moins une troisième région de densité de maillage (534, 634) présentant une densité supérieure à celle de la deuxième région de densité de maillage (532, 632), dans lequel les au moins une première, deuxième et troisième régions de densité de maillage (530, 532, 534, 630, 632, 634) sont disposées en augmentant la densité dans la direction de l'au moins une entrée vers l'au moins une sortie (120).

8. Amortisseur de bruit (100) selon l'une des revendications précédentes,
**caractérisé en ce que**
l'au moins une unité de rouleau de mailles de fibres (124, 224, 324, 424, 524, 624) comprend une maille de fibre enroulée avec au moins deux régions de densité de maillage (130, 132, 230, 232, 330, 332, 430, 432, 530, 532, 534, 630, 632, 634) ou une pluralité de mailles de fibre enroulées empilées présentant chacune une densité de maillage (130, 132, 230, 232, 330, 332, 430, 432, 530, 532, 534, 630, 632, 634).

9. Amortisseur de bruit (100) selon la revendication 8,
**caractérisé en ce que**
la direction d'enroulement est perpendiculaire à la direction de l'air circulant à travers l'amortisseur de bruit (100).

10. Amortisseur de bruit (100) selon la revendication 8 ou la revendication 9,
**caractérisé en ce que**
les mailles de fibres enroulées et empilées sont reliées entre elles.

11. Procédé (700) de production d'une unité de rouleau de mailles de fibres (124, 224, 324, 424, 524, 624) pour un amortisseur de bruit (100) pour systèmes d'air comprimé, en particulier pour systèmes de freinage de véhicules utilitaires, dans lequel l'amortisseur de bruit (100) comprend au moins une entrée, au moins une sortie (120) et un boîtier,
**caractérisé en ce que**
le procédé (700) comprend les étapes de :
- tricotage (702) d'un maillage tubulaire en fibres (704) à partir de fibres thermoplastiques (706) de telle sorte qu'au moins deux régions de densités de maillage différentes soient formées ;
- aplatissement contrôlé (708) du treillis tubulaire en fibres (704) ; et
- enroulement (712) du treillis tubulaire en fibres (704) aplati ;
dans lequel les au moins deux régions de densité de maillage sont disposées par densité croissante ou alternativement par rapport à une direction d'écoulement de l'air traversant l'amortisseur de bruit (100).

12. Procédé (800) de production d'une unité de rouleau de mailles de fibres (124, 224, 324, 424, 524, 624) pour un amortisseur de bruit (100) pour systèmes d'air comprimé, en particulier pour systèmes de freinage de véhicules utilitaires,
**caractérisé en ce que**
le procédé comprend les étapes de :
- tricotage et/ou tissage d'une pluralité de mailles de fibres à partir de fibres thermoplastiques présentant chacune au moins une densité de maillage ;
- enroulement (804, 808) des mailles de fibres pour former des rouleaux de mailles de fibres ; et
- empilement (810) des mailles de fibres enroulées pour former une unité de rouleau de mailles de fibres présentant au moins deux régions de densité de maillage ;
dans lequel les au moins deux régions de densité de maillage sont disposées par densité croissante ou alternativement par rapport à une direction d'écoulement de l'air traversant l'amortisseur de bruit.

13. Procédé (800) selon la revendication 12, comprenant en outre une étape de liaison des mailles de fibres enroulées entre elles.
